# EUROPÄISCHE PATENTANMELDUNG

(11) **EP 1 528 353 A1**
(43) Veröffentlichungstag der Anmeldung: **04.05.2005**
(21) Anmeldenummer: 04025441.9
(22) Anmeldetag: 26.10.2004
(51) Int. Cl.: G01B 11/00, G01C 11/02, G01S 5/16

(54) **Verfahren zur Kalibrierung eines 3D-Messgerätes**

(30) Priorität: 31.10.2003 DE 10350861
(71) Anmelder: Steinbichler Optotechnik GmbH, 83115 Neubeuern (DE)
(72) Erfinder: Prams, Matthias, 83064 Raubling (DE)
(74) Vertreter: Zinnecker, Armin, Dipl.-Ing.

(57) **Zusammenfassung**

Ein Verfahren dient zur Kalibrierung eines 3D-Meßgeräts (1). Um ein beliebiges 3D-Meßgerät (1) ohne herstellerspezifisches Know-how kalibrieren zu können, werden ein oder mehrere Merkmalskörper (15, 16, 17) eines Referenzkörpers (14) an einer oder mehreren Positionen in dem zu kalibrierenden Meßvolumen (12) des 3D-Meßgeräts (1) gemessen. Aus den gemessenen Werten wird ein Maß für den Meßfehler in Abhängigkeit von der Position im Meßvolumen (12) ermittelt. Daraus wird eine Fehlerkorrekturfunktion ermittelt (Fig. 3).

## Beschreibung

Die Erfindung betrifft ein Verfahren zur Kalibrierung eines 3D-Meßgerätes und ein Verfahren zum Bestimmen der 3D-Koordinaten eines Meßobjekts mit einem 3D-Meßgerät.

Bei dem 3D-Meßgerät kann es sich insbesondere um ein Trackingsystem handeln. Besonders geeignet sind optische Tracking-Systeme. Das optische Tracking-System kann insbesondere mit einem Scanner, beispielsweise einem Laser-Linien-Scanner, oder mit einem mechanischen Taster, gekoppelt sein. Die Erfindung kann allerdings auch mit einem Tracking-System realisiert werden, das auf Basis eines Laserstrahls und seiner Auslenkung funktioniert. Ferner kann die Erfindung auch mit einem Tracking-System realisiert werden, das nicht optisch funktioniert, beispielsweise einem Tracking-System auf Basis anderer elektromagnetischer Strahlung ähnlich dem GPS-System. Grundsätzlich sind berührungslose Tracking-Systeme aller Art geeignet.

Um hohe Genauigkeiten zu erreichen, müssen 3D-Meßgeräte kalibriert werden. Hierfür sind bereits Verfahren bekannt, die allerdings nur dann durchgeführt werden können, wenn die Modellparameter des 3D-Meßgeräts bekannt sind. Diese Bedingung ist in der Praxis allerdings nicht immer erfüllt.

Wenn es sich bei dem 3D-Meßgerät um eine herkömmliche 3D-Meßmaschine mit taktilen oder optischen Gebern handelt, kann folgende Vorgehensweise zur Kalibrierung durchgeführt werden: Anhand interferometrischer Längenmessungen werden Skalierwerte für Inkrementalgeber entlang der Achsen der 3D-Meßmaschine bestimmt. Anhand von Winkel-Endmaßen werden die Winkel, unter denen die Achsen montiert sind und die im Allgemeinen nahe bei 90° liegen, bestimmt. Anhand von zertifizierten Referenzkörpem, beispielsweise Kugelmaßstäben oder Längen-Endmaßen, können die 3D-Genauigkeiten verifiziert werden. Bekannt sind auch Verfahren, bei denen ein regelmäßiges Raster von Punkten im Raum angefahren wird, die Solllage der Punkte in Relation zur Ist-Lage der Punkte bestimmt wird und daraus die Modellparameter bestimmt werden. Bei diesem Verfahren dauert die Kalibrierung typischerweise mehrere Tage, möglicherweise auch Wochen. Es werden teure interferometrische Meßsysteme benötigt.

Wenn es sich bei dem 3D-Meßgerät, das kalibriert werden soll, um ein Trackingsystem handelt, beispielsweise ein optisches, elektronisches oder sonstiges Trakkingsystem, kann wie folgt vorgegangen werden: Ein Referenzkörper wird, beispielsweise mittels eines hochpräzisen Handlingsystems, insbesondere einer Koordinatenmeßmaschine, entlang eines regelmäßigen Rasters von Punkten im Raum bewegt, und die Position des Referenzkörpers wird aus Sicht des Trackingsystems ermittelt und gespeichert. Aus den Meßwertpaaren der Sollwerte und der Istwerte werden dann die Modellparameter bestimmt. Auch in diesem Fall dauert die Kalibrierung sehr lange, typischerweise einen bis mehrere Tage. Es wird ein das Meßvolumen umschließendes, hochpräzises und sehr teures Handlingsystem benötigt.

Wenn es sich bei dem 3D-Meßgerät um optische Flächensensoren oder Raumsensoren (bildgebende Sensoren, Fotogrammetriesysteme) handelt, kann zur Kalibrierung wie folgt vorgegangen werden: Mittels der Sensoren wird eine Vielzahl an Bildern von zertifizierten Maßstäben bzw. flächenhaft oder dreidimensional gestalteten Prüfkörpern aufgenommen. Auf den Prüfkörpern befinden sich vorkalibrierte, eindeutig vom Meßsystem identifizierbare Merkmale. In einem mathematisch aufwendigen Verfahren, beispielsweise Bündelblockausgleich mit räumlichem Rückwärtsschnitt, werden die Modellparameter des Sensorsystems bestimmt. Dabei wird die Kalibrierung des Meßsystems typischerweise vom Anwender vor Ort durchgeführt. Dabei können allerdings nur kleine Meßvolumina abgedeckt werden.

Aus der EP 0 452 422 B1 ist ein Verfahren zum Kalibrieren eines Sensors eines dreidimensionalen Formerfassungssystems bekannt.

Aus der DE 100 23 604 A1 ist ein eindimensionales Kalibriernormal für optische Koordinaten-Meßgeräte bekannt, das ein stabförmiges Kalibriermittel umfaßt.

Die US 2003/0038933 A1 offenbart ein Kalibrierverfahren eines 3D-Meßgeräts, bei dem mehrere Merkmalskörper gemessen und ein Maß für den Meßfehler ermittelt wird.

Aufgabe der Erfindung ist es, ein Verfahren zur Kalibrierung eines 3D-Meßgerätes vorzuschlagen, mit dem ein beliebiges 3D-Meßgerät ohne herstellerspezifisches Know-how kalibriert werden kann. Eine weitere Aufgabe der Erfindung besteht darin, ein verbessertes Verfahren zum Bestimmen der 3D-Koordinaten eines Meßobjekts mit einem 3D-Meßgerät vorzuschlagen.

Erfindungsgemäß wird diese Aufgabe durch die Merkmale des Anspruchs 1 gelöst. Gemäß dem Verfahren werden ein oder mehrere Merkmalskörper eines Referenzkörpers an einer oder mehreren Positionen in dem zu kalibrierenden Meßvolumen des 3D-Meßgeräts gemessen. Aus den gemessen Werten wird eine Maß für den Meßfehler in Abhängigkeit von der Position im Meßvolumen des 3D-Meßgeräts ermittelt. Daraus wird eine Fehlerkorrekturfunktion ermittelt. Es handelt sich um eine Fehlerkorrekturfunktion, die den Fehler in Abhängigkeit von der Position im Meßvolumen korrigiert. Die ermittelte Fehlerkorrekturfunktion kann in einem Speicher abgelegt werden. Sie steht für anschließende Messungen mit dem 3D-Meßgerät zur Verfügung. Die bei derartigen Messungen erfaßten Werte können mit der Fehlerkorrekturfunktion korrigiert werden.

Vorteilhafte Weiterbildungen sind in den Unteransprüchen beschrieben.

Der Referenzkörper und mit ihm der oder die Merkmalskörper können in dem Meßvolumen bewegt werden. Dies kann von Hand erfolgen. Es kann allerdings auch automatisiert und/oder maschinell erfolgen. Der Referenzkörper wird an alle Positionen bewegt, die für die Ermittlung der Fehlerkorrekturfunktion erforderlich sind. Stattdessen oder zusätzlich ist es auch möglich, das 3D-Meßgerät zu bewegen.

Es ist allerdings auch möglich, den Referenzkörper statisch zu messen, also nicht in dem Meßvolumen zu bewegen, wenn der Referenzkörper mehrere Merkmalskörper aufweist, die alle Positionen abdecken, die zur Ermittelung der Fehlerkorrekturfunktion erforderlich sind. Auch in diesem Fall werden im Sinne des Anspruchs 1 mehrere Merkmalskörper an mehreren Positionen in dem zu kalibrierenden Volumen des 3D-Meßgeräts gemessen.

Eine weitere vorteilhafte Weiterbildung ist dadurch gekennzeichnet, daß der oder die Merkmalskörper des Referenzkörpers nicht exakt bekannt sind. Kein einziger Merkmalskörper ist also exakt bekannt bzw. zertifiziert. In diesem Fall kann eine relative Fehlerkorrekturfunktion ermittelt werden.

Nach einer weiteren vorteilhaften Weiterbildung sind einer oder mehrere oder alle Merkmalskörper des Referenzkörpers exakt bekannt bzw. zertifiziert. In diesem Fall kann eine absolute Fehlerkorrekturfunktion ermittelt werden.

Eine weitere vorteilhafte Weiterbildung ist dadurch gekennzeichnet, daß die Fehlerkorrekturfunktion skaliert wird. Dies ist insbesondere dann von Vorteil, wenn der oder die Merkmalskörper des Referenzkörpers nicht exakt bekannt sind. In diesem Fall kann durch die Skalierung aus der relativen Fehlerkorrekturfunktion eine absolute Fehlerkorrekturfunktion ermittelt werden. Die Skalierung kann durch eine insbesondere einmalige Messung an nur einer Position des Meßvolumens mit einem exakt bekannten bzw. zertifizierten Merkmalskörper bzw. Referenzkörper erfolgen. Es ist also nicht erforderlich, einen exakt bekannten bzw. zertifizierten Referenzkörper bzw. Merkmalskörper im gesamten Meßvolumen zu bewegen. Die Bewegung über das gesamte Meßvolumen kann mit einem nicht exakt bekannten bzw. nicht zertifizierten Merkmalskörper bzw. Referenzkörper durchgeführt werden, um eine relative Fehlerkorrekturfunktion zu erhalten. Diese relative Fehlerkorrekturfunktion kann dann auf einfache Weise skaliert werden, indem eine einmalige Messung mit einem exakt bekannten bzw. zertifizierten Referenzkörper bzw. Merkmalskörper an nur einer Position des Meßvolumens durchgeführt wird. Es ist allerdings auch möglich, den exakt bekannten bzw. zerzifizierten Referenzkörper bzw. Merkmalskörper an mehreren Positionen des Meßvolumens zu messen. In diesem Fall kann durch Mittelung mehrerer Ergebnisse ein besserer Skalierwert errechnet werden. Es ist nicht ausgeschlossen, aber möglich, im allgemeinen jedoch nicht erforderlich, die Fehlerkorrekturfunktion zu skalieren, wenn einer oder mehrere oder alle Merkmalskörper des Referenzkörpers exakt bekannt sind bzw. zertifiziert sind.

Als Maß für den Meßfehler kann insbesondere die Standardabweichung oder die mittlere oder maximale Abweichung der Best-Fit-Ausrichtung verwendet werden. Ebenso können auch andere mathematische Ausgleichsverfahren verwendet werden. Als Fehlerkorrekturfunktionen eignen sich allerdings nicht nur Polynome, sondem auch Splines, Fehlerkorrekturtabellen oder beliebige Kombinationen davon.

Eine weitere vorteilhafte Weiterbildung ist dadurch gekennzeichnet, daß der Referenzkörper und/oder der oder die Merkmalskörper aus einem temperaturinvarianten Material gefertigt sind.

Eine weitere vorteilhafte Weiterbildung ist dadurch gekennzeichnet, daß die Positionen, an denen der oder die Merkmalskörper gemessen werden, repräsentativ und/oder gleichmäßig im Meßvolumen verteilt sind. Wenn bei der Erfassung der Merkmalskörper bzw. der Bewegung des Referenzkörpers im Meßvolumen auf eine repräsentative und/oder möglichst gleichmäßige Verteilung im Meßvolumen geachtet wird, kann die Fehlerkorrekturfunktion besonders gut bestimmt werden. Sie liefert dann ein besonders gutes Ergebnis.

Die der Erfindung zugrundeliegende Aufgabe wird ferner durch ein Verfahren zum Bestimmen der 3D-Koordinaten eines Meßobjekts mit einem 3D-Meßgerät gelöst, bei dem die Meßwerte in Abhängigkeit von ihrer Position im Meßvolumen durch eine Fehlerkorrekturfunktion korrigiert werden.

Vorteilhaft ist es, wenn die Fehlerkorrekturfunktion nach dem oben beschriebenen, erfinderischen Verfahren ermittelt wurde.

Ausführungsbeispiele der Erfindung werden nachstehend anhand der beigefügten Zeichnung im einzelnen erläutert. In der Zeichnung zeigt
- Fig. 1: ein optisches Trackingsystem mit einem Laser-Linien-Scanner in einer schematischen Darstellung
- Fig. 2: ein optisches Trackingsystem mit einem mechanischen Taster in einer schematischen Darstellung,
- Fig. 3: das optische Trackingsystem gemäß Fig. 1 und 2 mit einem Referenzkörper,
- Fig. 4: einen als Kugelstab ausgebildeten Referenzkörper in einer Seitenansicht,
- Fig. 5: einen Referenzkörper mit einer Vielzahl von LEDs in einer Ansicht von vorne und
- Fig. 6: den Referenzkörper gemäß Fig. 5 mit schematisch angedeuteten Meßwerten.

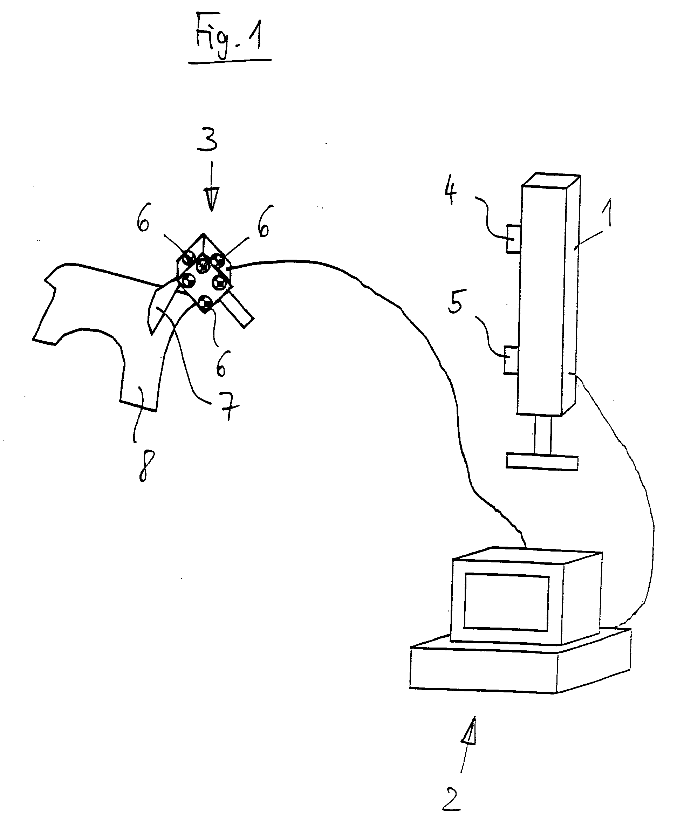

Das in Fig. 1 gezeigte optische Trackingsystem 1 ist über einen Rechner 2, beispielsweise einen PC, mit einem Laser-Linien-Scanner 3 gekoppelt. Das optische Tracking-System 1 umfaßt zwei Sensoren 4, 5, vorzugsweise CCD-Sensoren, mit einer entsprechenden Optik. Auf dem Gehäuse des Laser-Linien-Scanners 3 sind allseitig LEDs 6 verteilt, und zwar derart, daß von den Sensoren 4, 5 des optischen Trackingsystems 1 in jeder Stellung des Laser-Linien-Scanners 3 mindestens drei der LEDs 6 gesehen werden können. Die LEDs 6 werden in zeitlich kurzer Folge nacheinander oder gleichzeitig eingeschaltet und geben jeweils einen kurzen Lichtblitz ab oder emittieren kontinuierlich. Die Sensoren 4, 5 des optischen Trackingsystems 1 registrieren jeden Lichtblitz und berechnen daraus eine 3D-Koordinate für die jeweils blitzende LED 6. Damit kann die räumlich Lage und Orientierung des Laser-Linien-Scanners 3 eindeutig bestimmt werden. Der Laser-Linien-Scanner 3 wird vorab kalibriert, so daß die Lage der von ihm ausgestrahlten Laser-Lichtlinie 7 sehr genau in Bezug auf die Lage der LEDs 6 bekannt ist. Aus den 3D-Koordinaten der LEDs 6 kann somit auf die 3D-Lage und Orientierung der Laser-Lichtlinie 7 exakt zurückgerechnet werden. Durch Überstreichen der gesamten Oberfläche eines Objekts 8, beispielsweise eines Bauteils eines Kraftfahrzeugs, kann somit eine sehr dichte Meßpunktwolke der Bauteiloberfläche erfaßt und in dem Rechner 2 gespeichert werden.

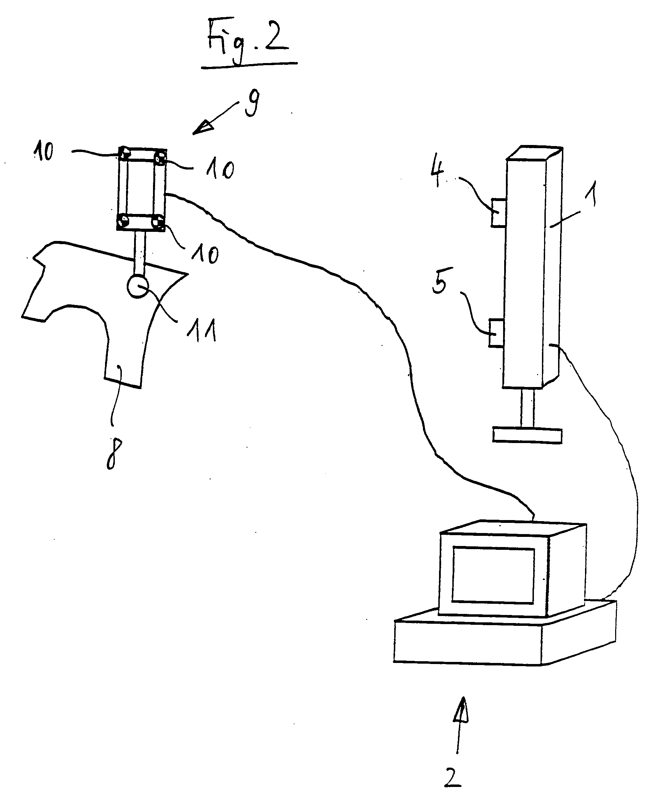

Die Fig. 2 zeigt eine Abwandlung des Systems gemäß Fig. 1, bei der der Laser-Linien-Scanner 3 durch einen mechanischen Taster 9 ersetzt ist, der über den Rechner 2 mit dem optischen Tracking-System 1 gekoppelt ist. Auf dem mechanischen Taster 9 sind vier LEDs 10 angebracht. Die Mindestanzahl der LEDs beträgt drei, vorteilhafterweise werden vier bis zehn LEDs verwendet. Die LEDs 10 werden in zeitlicher kurzer Folge nacheinander eingeschaltet und geben jeweils einen kurzen Lichtblitz ab. Die Sensoren 4, 5 des optischen Trackingsystems 1 registrieren jeden Lichtblitz und berechnen daraus eine 3D-Koordinate für die jeweilige LED 10. Der mechanische Taster 9 wird vorab kalibriert, so daß das Kugelzentrum seiner Tastkugel 11 sehr genau in Bezug auf die Lage der LEDs 10 bekannt ist. Anstelle der Tastkugel 11 kann auch eine Tastspitze verwendet werden, also eine Kugel mit einem sehr kleinen Radius. Aus den 3D-Koordinaten der LEDs 10 kann somit exakt auf die 3D-Koordinate des Kugelmittelpunktes der Tastkugel 11 zurückgerechnet werden. Der mechanische Taster 9 wird von Hand an verschiedene Punkte des zu vermessenden Objektes 8 gebracht, und zwar derart, daß seine Tastkugel 11 die Oberfläche des Objektes 8 jeweils berührt. Die 3D-Koordinaten des Kugelzentrums der Tastkugel 11 werden auf diese Weise bestimmt. Sie können im Rechner 2 abgespeichert werden.

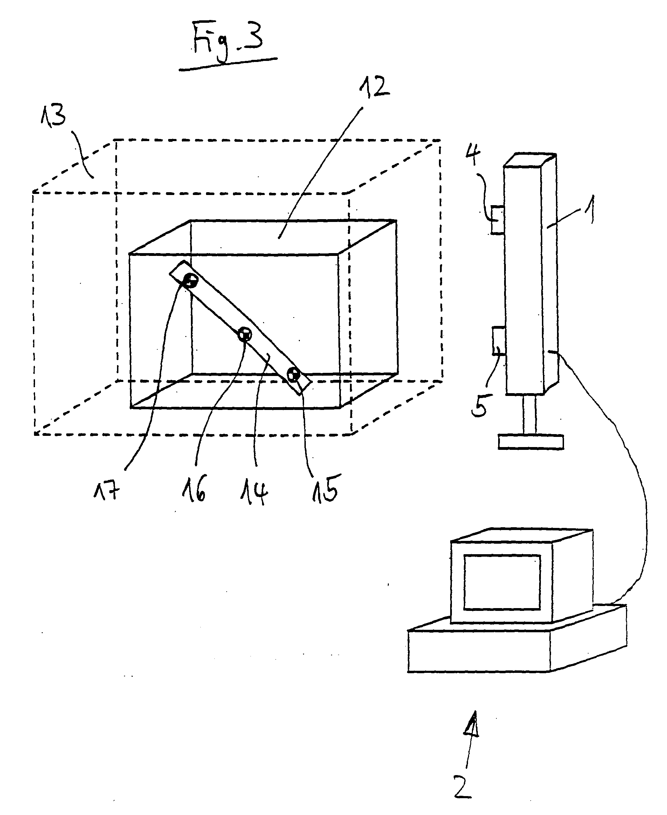

Die Fig. 3 zeigt einen Aufbau zur Kalibrierung des optischen Trackingsystems 1 der Figuren 1 und 2. Das optische Trackingsystem 1 soll für Messungen innerhalb eines Meßvolumens 12 kalibriert werden, welches innerhalb des größtmöglichen Meßvolumens 13 des optischen Trackingsystems 1 liegt. In dem Meßvolumen 12 ist ein Referenzkörper 14 vorhanden, der drei Merkmalskörper 15, 16, 17 umfaßt, die jeweils von einer LED gebildet werden. Die LEDs 15 - 17 sind auf dem Referenzkörper 14 angebracht. Der Referenzkörper 14 ist ein Meßstab aus einem vorzugsweise temperaturinvarianten Material.

Bei der Durchführung des Kalibrierverfahrens werden die LEDs 15 - 17 in zeitlicher kurzer Folge nacheinander eingeschaltet. Sie geben jeweils einen kurzen Lichtblitz ab. Die Sensoren 4, 5 des zu kalibrierenden optischen Trackingsystems 1 registrieren jeden Lichtblitz und berechnen daraus eine 3D-Koordinate für jede LED 15-17, also die Position der jeweiligen LED 15 - 17 im Koordinatensystem des optischen Trackingsystems 1. Dies kann dadurch geschehen, daß aus dem Abbild der LEDs 15 - 17 auf jedem der Sensoren 4, 5 jeweils ein Schwerpunktstrahl errechnet wird und aus dem Schnittpunkt von jeweils zwei zusammengehörigen Strahlen die räumlichen Koordinaten der LEDs 15 - 17 bestimmt werden. Aus den räumlichen Koordinaten der LEDs 15 - 17 können paarweise Distanzwerte berechnet werden, also die Distanzwerte 15 - 16, 15 - 17 und 16 - 17.

Wenn es sich bei dem Referenzkörper 14 um einen zertifizierten Referenzkörper handelt, also um einem Referenzkörper, bei dem die Positionen der die Merkmalskörper bildenden LEDs 15 - 17 exakt bekannt sind, können die aus den Positionen der LEDs 15 - 17 bestimmen Distanzwerte mit den realen, zertifizierten Distanzwerten verglichen werden. Dieser Vergleich liefert ein absolutes Maß für den Meßfehler.

Wenn es sich bei dem Referenzkörper 14 um einen nicht zertifizierten Referenzkörper handelt, also um einen Referenzkörper, bei dem die Positionen der LEDs 15 - 17 nicht exakt bekannt sind, können die aus den Positionen der LEDs 15 - 17 bestimmten Distanzwerte mit den angenommenen Distanzwerten verglichen werden. Dieser Vergleich liefert ein relatives Maß für den Meßfehler.

Der Referenzkörper 14 wird sodann in eine andere Position im zu kalibrierenden Teil des Meßvolumens 12 gebracht. Dort wird der soeben beschriebene Vorgang wiederholt. Der gesamte Vorgang wird für eine ausreichende Anzahl von Positionen im Meßvolumen 12 durchgeführt. Auf diese Weise erhält man aus den gemessenen Werten ein Maß für den Meßfehler in Abhängigkeit von der Position im Meßvolumen 12. Die Kalibrierung kann auch im größtmöglichen Meßvolumen 13 durchgeführt werden.

In jeder Position, in der sich der Referenzkörper 14 befindet, werden die 3D-Koordinaten der LEDs 15 - 17 mittels des optischen Trackingsystems 1 gemessen und daraus paarweise die Distanzwerte berechnet. Dabei kann sich der Referenzkörper 14 während der Messung in einer statisch festen Position befinden. Er kann sich allerdings auch während der Messung dynamisch bewegen, wenn seine Bewegungsgeschwindigkeit gegenüber der Erfassungsrate der LEDs langsam ist. Zur Beschleunigung des Kalibrierungsvorgangs ist es von Vorteil, wenn der Referenzkörper 14 so schnell wie vertretbar im Meßvolumen 12 bewegt wird. Der Referenzkörper 14 wird in so viele verschiedene Positionen des Meßvolumens 12 gebracht, daß für sämtliche Teile des gesamten Meßvolumens jeweils gemessene 3D-Koordinaten der LEDs 15 bis 17 vorliegen. Die Größe der Teile des Meßvolumens 12, für die jeweils Meßwerte der 3D-Positionen vorliegen, kann je nach erforderlicher Genauigkeit und nach der angewendeten Fehlerkorrekturfunktion gewählt werden.

Abschließend wird eine Fehlerkorrekturfunktion ermittelt, und zwar aus dem in Abhängigkeit von der Position im Meßvolumen ermittelten Maß für den Meßfehler. Die nach dem beschriebenen Verfahren berechneten Distanzwerte werden mit den zertifizierten Distanzen (wenn es sich um einen zertifizierten Referenzkörper 14 handelt) oder mit den angenommenen Distanzen (wenn es sich um einen nicht zertifizierten Referenzkörper 14 handelt) verglichen. Es ergibt sich für jeden gemessenen Distanzwert im erstgenannten Fall ein absoluter und im zweitgenannten Fall ein relativer Meßfehler, der demjenigen Teil des Meßvolumens 12 zugeschrieben wird, in dem sich der Referenzkörper 14 oder die beteiligten LEDs 15 - 17 während der Messung befanden.

Die Fehlerkorrekturfunktion kann als Polynom aufgestellt werden. Die Koeffizienten oder Modellparameter der als Polynom oder als sonstige Funktion angesetzten Fehlerkorrekturfunktion können in einem iterativen Verfahren so verändert werden, daß durch die Anwendung der Korrekturfunktion auf die gemessenen Positionen der LEDs und die erneute Berechnung der Distanzen schrittweise der absolute oder relative Meßfehler minimiert wird, also nahe bei Null zu liegen kommt. Als mathematische Optimierungsmethode kann beispielsweise die Methode der kleinsten Fehlerquadrate herangezogen werden.

Vorzugsweise sind die Distanzen der LEDs 15 - 17 auf dem Referenzkörper 14 genau bekannt, also zertifiziert. In diesem Fall liegen bei dem beschriebenen Vorgehen absolute Meßfehler vor, die nach den beschriebenen Verfahren minimiert werden können, um die Fehlerkorrekturfunktion zu erhalten. Damit liegt als Ergebnis ein kalibriertes optisches Trackingsystem vor.

Wenn ein nicht zertifizierter Referenzkörper 14 verwendet wird, wird das Verfahren ebenfalls wie beschrieben durchgeführt. Als Vergleichswerte für die Distanzwerte zwischen den LEDs 15 - 17 werden geschätzte oder grob vermessene Distanzwerte verwendet. Infolgedessen erhält man beim Vergleich der Distanzwerte nur relative Meßfehler. Hieraus erhält man eine Fehlerkorrekturfunktion, die die relativen Meßfehler minimiert. Dies kann beispielsweise dazu führen, daß im Meßvolumen 12 überall gleich lange Distanzen gemessen werden, die aber alle um einen bestimmten Faktor vom zutreffenden Wert abweichen. Es ist daher erforderlich, die relative Meßgenauigkeit anhand eines Skalierungsfaktors zu einer absoluten Meßgenauigkeit zu machen.

Hierzu wird ein zertifizierter Referenzkörper an einer oder mehreren Stellen des Meßvolumens 12 vermessen.

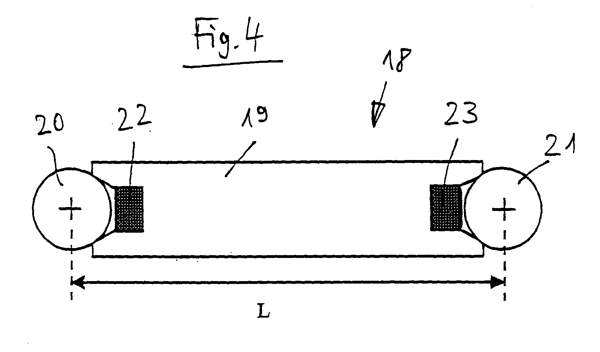

Beispielsweise handelt es sich bei dem zertifizierten Referenzkörper um einen Kugelstab 18 der in Fig. 4 gezeigten Art. Er besteht aus einem langgestreckten Körper 19, an dessen beiden Enden jeweils eine kegelstumpfförmige Aufnahme für jeweils eine Meßkugel 20, 21 vorhanden sind. Die Meßkugeln 20, 21 werden durch Permanentmagnete 22, 23 in ihren Aufnahmen festgehalten. Die Länge L des Kugelstabs 18, die dem Abstand der Zentren der Meßkugeln 20, 21 entspricht, ist sehr genau bekannt. Der Kugelstab 18 kann also sehr genau zertifiziert werden.

Der Skalierwert berechnet sich aus dem Koeffizienten der zertifizierten Länge L zu der vom optischen Trackingsystem 1 gemessenen Länge. Dieser Skaliertwert muß nur an einer Stelle des Meßvolumens 12, also in nur einer Position des Kugelstabs 18, bestimmt werden. Er kann dann auf alle gemessenen Punkte des optischen Trackingsystems 1 angewendet werden. Wenn auf alle gemessenen Punkte des optischen Trackingsystems 1 zunächst die relative Fehlerkorrekturfunktion angewendet wird, und wenn anschließend die so bestimmten Werte mit dem Skalierwert multipliziert werden, erhält man absolute, sehr genaue 3D-Koordinaten.

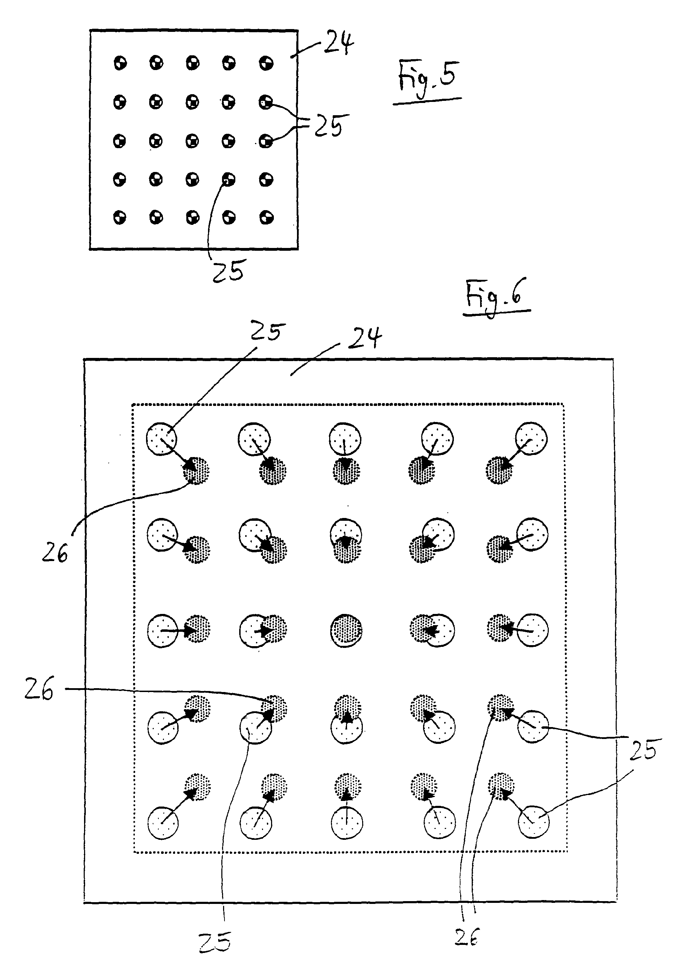

Die von dem optischen Trackingsystem 1 erfaßten 3D-Koordinaten der LEDs 15 - 17 können ein hohes Meßwertrauschen aufweisen. Dadurch können die gemessenen Distanzwerte sehr stark streuen, so daß, da immer nur die Summe aus Meßfehler und Rauschanteil gemessen wird, der absolute oder relative Meßfehler nicht mit einer ausreichenden Genauigkeit ermittelt werden kann. Um dem abzuhelfen kann der in Fig. 5 gezeigte Referenzkörper 24 verwendet werden, der eine Vielzahl, nämlich fünfundzwanzig LEDs 25 aufweist. Mittels des optischen Trackingsystems 1 werden die 3D-Positionen der LEDs 25 mit einem additiven Rauschanteil gemessen. In einem anschließenden Verfahrensschritt werden die gemessenen 3D-Positionen durch eine Best-Fit-Ausrichtung auf die zertifizierten (wenn der Referenzkörper 24 zertifiziert ist) oder angenommenen (wenn der Referenzkörper 24 nicht zertifiziert ist) Positionen 26 des Referenzkörpers 24 abgebildet.

Dieser Verfahrensschritt ist in Fig. 6 exemplarisch dargestellt. Die statistischen Kennwerte der Best-Fit-Ausrichtung - insbesondere die mittlere Abweichung, also der Mittelwert der Abbildungsfehler, bzw. die Standardabweichung - sind ein Maß für den Meßfehler. Wird der Referenzkörper 24 anschließend wie oben beschrieben an vielen Positionen im Meßvolumen 12 vermessen, erhält man die Verteilung der Meßwertfehler und kann daraus wie oben beschrieben die Fehlerkorrekturfunktion ermitteln.

Durch die Erfindung ist es möglich, ein beliebiges 3D-Meßgerät ohne herstellerspezifisches Know-how zu kalibrieren. Hierzu wird ein für das jeweilige 3D-Meßgerät geeigneter Referenzkörper, beispielsweise ein Meßstab, eine Meßplatte oder ein komplex geformter Meßkörper, in verschiedene Positionen innerhalb des zu kalibrierenden Meßvolumens, das mit dem größtmöglichen Meßvolumen übereinstimmen kann, gebracht und mit dem 3D-Meßgerät in der jeweiligen Position vermessen. Anhand der Abweichungen der gemessenen Merkmalskörper zu absoluten (zertifizierten) oder relativen (vorgegebenen/angenommenen) Maßen des Referenzkörpers bzw. anhand der Streuung der gemessenen Merkmalskörper wird sodann eine Fehlerkorrekturfunktion ermittelt.

Durch Anwendung dieser Fehlerkorrekturfunktion ist es dann möglich, einen beliebigen Meßwert des 3D-Meßgeräts so zu korrigieren, daß ein verbesserter, nahezu fehlerfreier Meßwert vorliegt.

Das erfindungsgemäße Verfahren kann ohne Einbindung bzw. ohne das Know-how des Herstellers des 3D-Meßsystems durchgeführt werden. Es ist möglich, einfache und kostengünstige Referenzkörper zu verwenden. Die Kalibrierung kann vor Ort vom Anwender durchgeführt werden. Sie kann je nach 3D-Meßgerät sehr schnell durchgeführt werden, so daß es möglich ist, sie wiederholt, beispielsweise zur Temperaturkompensation, zur Gewährleistung der Meßgenauigkeit oder für ähnliche Zwecke einzusetzen. Nach der Erfindung kann ein möglichst einfach gestalteter Referenzkörper verwendet werden, der mindestens einen Merkmalskörper aufweist, der mit dem zu kalibrierenden 3D-Meßgerät präzise, einfach und schnell gemessen werden kann. Bei herkömmlichen 3D-Koordinatenmeßmaschinen kann dies beispielsweise eine Kugel, ein Teil einer Kugel, ein Kegel oder Ähnliches sein. Bei optischen Trackingsystemen kann dies beispielsweise eine Marke, vorzugsweise eine automatisch identifizierbare Marke, eine aktive Leuchtdiode oder Ähnliches sein. Entscheidend ist, daß durch jeden Merkmalskörper mindestens ein eindeutiges Merkmal auf dem Referenzkörper identifiziert werden kann, im einfachsten Fall ein 3D-Punkt (in Bezug auf ein am Referenzkörper willkürlich festgemachtes Koordinatensystem). Es kann sich aber auch um mehrere Merkmale handeln, wie beispielsweise Punkt und Richtung, Punkt und Durchmesser, Punkt und Richtung und Dimension oder Ähnliches. Dem liegt die Idee zugrunde, daß diese Merkmale mindestens ein bewegungs- und rotationsinvariantes Merkmal beinhalten, bzw. daß aus der Kombination von mindestens zwei Merkmalen ein bewegungs- und rotationsinvariantes Merkmal abgeleitet werden kann, dessen gemessene Ausprägung im Unterschied zur tatsächlichen Ausprägung einen Rückschluß auf den Meßfehler zulässt.

Im einfachsten Fall besteht der Referenzkörper aus einem Stab, der zwei Merkmalskörper aufweist, deren eindeutige Position jeweils durch einen 3D-Punkt identifiziert ist, woraus eine Distanz der Punkte errechnet werden kann. Bei der Messung eines solchen Referenzkörpers mit dem zu kalibrierenden 3D-Meßgerät wird jeder Merkmalskörper gemessen, und daraus wird die gemessene Distanz errechnet. Es ist sodann möglich, die gemessene Distanz mit der tatsächlichen Distanz zu vergleichen und daraus ein Maß für den Meßfehler abzuleiten. Es ist auch denkbar, einen Referenzkörper mit nur einem einzigen Merkmalskörper zu verwenden. Wenn der Merkmalskörper durch eine Kugel oder einen Teil einer Kugel realisiert wird, kann mit dem zu kalibrierenden 3D-Meßgerät der Durchmesser der Kugel gemessen werden. Es ist sodann möglich, den gemessenen Durchmesser mit dem tatsächlichen Durchmesser zu vergleichen und daraus ein Maß für den Meßfehler abzuleiten. Es ist allerdings auch möglich, einen Referenzkörper mit vielen Merkmalskörpem zu verwenden. In diesem Fall wird jeder Merkmalskörper mit dem zu kalibrierenden 3D-Meßgerät vermessen.

Es sind verschiedene Möglichkeiten der Meßfehlerbewertung durchführbar, insbesondere folgende:
(1) Die gemessenen 3D-Punkte der Merkmalskörper, die jeweils fehlerbehaftet sind und die sich im Koordinatensystem des 3D-Meßgerätes befinden, werden durch eine Best-Fit-Ausrichtung auf die tatsächliche Position der Merkmalskörper, die in einem willkürlich gewählten, am Referenzkörper festgemachten Koordinatensystem vorliegen, abgebildet. Die Qualität, mit der diese Ausrichtung gelingt, ist ein Maß für den Meßfehler. Es können beispielsweise die Standardabweichung der Best-Fit-Ausrichtung, der mittlere oder maximal auftretende Fehler oder Ähnliches herangezogen werden. Bei der Best-Fit-Ausrichtung können auch Merkmale wie Richtung, Durchmesser, Dimension der Merkmalskörper berücksichtigt werden.
(2) Auf den gemessenen 3D-Punkten der Merkmalskörper können paarweise Distanzen errechnet werden. Diese Distanzen können mit den tatsächlichen Distanzen verglichen werden, und daraus kann ein Maß für den Meßfehler abgeleitet werden, z.B. durch Mittelung der Distanzmeßfehler. Es ist allerdings auch möglich, die einzelnen Distanzmeßfehler zu berücksichtigen. Da sie an verschiedenen Orten des Referenzkörpers und damit an verschiedenen Orten im Meßvolumen des 3D-Meßgeräts auftreten, lassen sie Rückschlüsse über die ortsabhängige Ausprägung des Meßfehlers zu.
(3) Aus den gemessenen 3D-Punkten der Merkmalskörper kann aus jedem Satz von drei Merkmalskörpem jeweils ein Dreieck berechnet werden. Die Form oder Fläche des jeweiligen Dreiecks kann mit der tatsächlichen Ausprägung verglichen werden. Daraus kann ein Maß für den Meßfehler abgeleitet werden.
(4) Die Möglichkeiten (1) - (3) können beliebig kombiniert werden.

Die Positionen und die Anzahl der Messungen bestimmen sich vorzugsweise so, daß die ermittelten Meßfehler im Meßvolumen des 3D-Meßgeräts repräsentativ verteilt sind. Es ist denkbar, daß ein komplex gestalteter Referenzkörper, der eine ausreichende Anzahl von Merkmalskörpem aufweisen kann, an nur einer Position im Meßvolumen vermessen wird, daß dadurch eine ausreichende Anzahl von Maßen für die Meßfehler an verschiedenen Orten im Meßvolumen erhalten wird und daß dadurch die Verteilung der Meßfehler des 3D-Meßgerätes repräsentativ beschrieben wird.

Es ist ebenso denkbar, daß ein einfacher Referenzkörper, welcher bei jeder Messung nur ein Maß für den Meßfehler liefert, an mehreren bzw. einer Vielzahl von Positionen im Meßvolumen vermessen wird und daß dadurch die Verteilung der Meßfehler des 3D-Meßgerätes repräsentativ beschrieben wird.

Es ist ebenso denkbar, daß ein komplex gestalteter Referenzkörper mit einer bestimmten Anzahl von Merkmalskörpern, welche nur einen Teil des Meßvolumens abdecken, an mehreren bzw. einer Vielzahl von Positionen im Meßvolumen vermessen wird, so daß durch die mehrfache Messung jeweils mehrere Maße für den Meßfehler erhalten werden, wodurch die Verteilung der Meßfehler des 3D-Meßgeräts repräsentativ beschrieben wird.

Dadurch, daß der Referenzkörper dynamisch während der Messung durch das Meßvolumen bewegt wird, kann der Kalibriervorgang signifikant beschleunigt werden. Dies setzt voraus, daß ein schnell messendes 3D-Meßgerät wie beispielsweise ein Tracking-System verwendet wird. Dabei muß die Bewegung langsam im Vergleich zur Meßgeschwindigkeit des 3D-Meßgeräts erfolgen.

Der Erfindung liegt die Idee zugrunde, daß aus der repräsentativen Verteilung der Maße für den Meßfehler des zu kalibrierenden 3D-Meßgerätes durch ein mathematisches Verfahren eine Fehlerkorrekturfunktion ermittelt wird. Durch Anwendung dieser Fehlerkorrekturfunktion ist es fortan möglich, einen beliebigen Meßwert des 3D-Meßgeräts anhand der Fehlerkorrekturfunktion so zu korrigieren, daß ein verbesserter, weniger fehlerbehafteter Meßwert vorliegt.

Die Art der verwendeten Fehlerfunktion kann auf die bei dem jeweiligen 3D-Meßgerät typischerweise auftretenden Meßfehlerverteilungen abgestimmt sein. Die Fehlerkorrekturfunktion kann durch eine einfache mathematische Funktion dargestellt sein, beispielsweise durch eine auf Polynomen basierende Funktion. Sie kann allerdings auch beliebig komplex ausgeprägt sein, beispielsweise als eine auf Splines basierende Funktion. Die Fehlerkorrekturfunktion kann auch durch eine Tabelle von Korrekturwerten repräsentiert sein. Es ist ferner denkbar, einfache oder komplexe Funktionen mit einer Tabelle von Korrekturwerten zu kombinieren. Für das erfindungsgemäße Verfahren ist es grundsätzlich ohne Bedeutung, durch welches mathematische Verfahren die Fehlerkorrekturfunktion ermittelt wird. Es kann sich um analytische Lösungsansätze, um iterative Verfahren, um Optimierungsalgorithmen oder Ähnliches handeln.

Wenn absolut exakte Meßfehler verwendet werden sollen, ist es erforderlich, daß mindestens ein Merkmal des Referenzkörpers exakt bekannt ist. Dies wird typischerweise durch Zertifizierung des Referenzkörpers sichergestellt. In diesem Fall liefert die Fehlerkorrekturfunktion unmittelbar präzise Meßwerte.

Wenn relative Meßfehler verwendet werden sollen, kann man sich die Eigenschaft zunutze machen, daß der Referenzkörper immer die gleiche Gestalt hat. Die ermittelte Fehlerkorrekturfunktion liefert Meßwerte, die erst nach zusätzlicher Anwendung eines Skalierwertes präzise Meßwerte ergeben. Dieser Skalierwert kann durch Vermessung eines bekannten Standardprüfkörpers in einer Position ermittelt werden. Es ist allerdings auch möglich, den Standardprüfkörper in mehreren Positionen zu vermessen, um den Skalierwert zu erhalten.

## Patentansprüche

1. Verfahren zur Kalibrierung eines 3D-Meßgeräts (1),
**dadurch gekennzeichnet,**
**daß** einer oder mehrere Merkmalskörper (15, 16, 17; 25) eines Referenzkörpers (14; 24) an einer oder mehreren Positionen in dem zu kalibrierenden Meßvolumen (12) des 3D-Meßgeräts (1) gemessen werden,
**daß** aus den gemessenen Werten ein Maß für den Meßfehler in Abhängigkeit von der Position im Meßvolumen (12) ermittelt wird
und **daß** daraus eine Fehlerkorrekturfunktion ermittelt wird.

2. Verfahren nach Anspruch 1, **dadurch gekennzeichnet, daß** der Referenzkörper (14; 24) in dem Meßvolumen (12) bewegt wird und/oder das 3D-Meßgerät bewegt wird.

3. Verfahren nach Anspruch 1 oder 2, **dadurch gekennzeichnet, daß** der oder die Merkmalskörper (15, 16, 17; 25) des Referenzkörpers (14; 24) nicht exakt bekannt sind.

4. Verfahren nach Anspruch 1 oder 2, **dadurch gekennzeichnet, daß** einer oder mehrere oder alle Merkmalskörper (15, 16, 17; 25) des Referenzkörpers (14; 24) exakt bekannt sind.

5. Verfahren nach einem der vorhergehenden Ansprüche, **dadurch gekennzeichnet, daß** die Fehlerkorrekturfunktion skaliert wird.

6. Verfahren nach einem der vorhergehenden Ansprüche, **dadurch gekennzeichnet, daß** als Maß für den Meßfehler die Standardabweichung oder die mittlere oder maximale Abweichung der Best-Fit-Ausrichtung verwendet wird.

7. Verfahren nach einem der vorhergehenden Ansprüche, **dadurch gekennzeichnet, daß** der Referenzkörper (14; 24) und/oder der oder die Merkmalskörper aus einem temperaturinvarianten Material gefertigt sind.

8. Verfahren nach einem der vorhergehenden Ansprüche, **dadurch gekennzeichnet, daß** die Positionen, an denen der oder die Merkmalskörper (15, 16, 17; 25) gemessen werden, repräsentativ und/oder gleichmäßig im Meßvolumen (12) verteilt sind.

9. Verfahren zum Bestimmen der 3D-Koordinaten eines Meßobjekts (8) mit einem 3D-Meßgerät (1),
**dadurch gekennzeichnet,**
**daß** die Meßwerte in Abhängigkeit von ihrer Position im Meßvolumen (13) durch eine Fehlerkorrekturfunktion korrigiert werden.

10. Verfahren nach Anspruch 9, **dadurch gekennzeichnet, daß** die Fehlerkorrekturfunktion nach einem Verfahren nach einem der Ansprüche 1 bis 8 ermittelt wurde.
